Europäisches Patentamt

European Patent Office

Office européen des brevets

(11) Veröffentlichungsnummer: **0 310 980 B1**

(12) **EUROPÄISCHE PATENTSCHRIFT**

(45) Veröffentlichungstag der Patentschrift: **11.03.92**

(21) Anmeldenummer: **88116289.5**

(22) Anmeldetag: **01.10.88**

(51) Int. Cl.⁵: **B01J 2/22**

(54) **Verfahren und Walzenpressen zum Herstellen von stückigem Material aus feinteiligem Rauchgasgips.**

(30) Priorität: **03.10.87 DE 3733500**

(43) Veröffentlichungstag der Anmeldung:
**12.04.89 Patentblatt 89/15**

(45) Bekanntmachung des Hinweises auf die
Patenterteilung:
**11.03.92 Patentblatt 92/11**

(84) Benannte Vertragsstaaten:
**BE FR GB IT NL**

(56) Entgegenhaltungen:
**EP-A- 0 173 061**
**AT-B- 382 552**
**DD-A- 212 217**
**DE-A- 3 207 856**

(73) Patentinhaber: **Alexanderwerk Aktiengesellschaft**
**Postfach 100720 Kippdorfstrasse 6-24**
**W-5630 Remscheid 1(DE)**

(72) Erfinder: **Warnecke, Karl**
**Neuenflügel 49**
**W-5632 Wermelskirchen(DE)**
Erfinder: **Wiesner, Hermann**
**Am Kirschbaum 15**
**W-5632 Wermelskirchen(DE)**
Erfinder: **Eggert, Axel**
**Alte Schulstrasse 20**
**W-4019 Monheim(DE)**

(74) Vertreter: **Patentanwaltsbüro Cohausz & Florack**
**Schumannstrasse 97**
**W-4000 Düsseldorf 1(DE)**

## Beschreibung

Die Erfindung bezieht sich auf ein Verfahren zum Herstellen von stückigem Material aus feinteiligem Rauchgasgips mit einem Gehalt an freiem Wasser von größer 0 Gewichts-% in einer Mantelflächen aufweisenden Walzenpresse.

Die Erfindung betrifft ferner eine Walzenpresse aus zwei Mäntel aufweisenden Walzen und einer dem Walzenspalt vorgeordneten Materialzugabe zur Durchführung des vorgenannten Verfahrens.

Beim Kompaktieren von feinteiligem Rauchgasgips ohne Bindemittel oder andere Zusätze bereitet der Zusammenhalt des kompaktierten Rauchgasgipses über längere Zeit, insbesondere unter dem Einfluß von Wasser, Probleme.

Bei einem bekannten Verfahren der eingangs genannten Art, bei dem die Teilchengröße des Rauchgasgipses zu 90 Gewichts-% unter 200 µm liegt und keine Teilchen mit einer Größe von über 500 µm vorkommen, wird der Rauchgasgips bei einem Gehalt an freiem Wasser zwischen größer 0 und 4 Gewichts-% bei einer spezifischen Anpreßkraft zwischen 1 und 5 KN/cm Walzenbreite gepreßt, wobei der Wassergehalt bei Brikettierwalzen an der oberen Grenze und bei glatten oder profilierten (aufgerauhten) Walzen an der unteren Grenze liegt (DE-OS 26 58 915). Versuche mit einem solchen Verfahren sollen allerdings ergeben haben, daß es zu erheblichen Störungen bei der kontinuierlichen Beschickung der Walzenpresse und zu Qualitätsschwankungen im kompaktierten, kleinstückigen Material kommt. Diese Schwierigkeiten sollen dadurch überwunden worden sein, daß Rauchgasgips mit einem Gehalt an freiem Wasser von praktisch 0 % einer Brikettierwalze zugeführt wird, in deren Walzenmantel Formenvertiefungen genau definierter Größe vorgesehen sind, und daß mit einer verhältnismäßig hohen Anpreßkraft von 10 bis 50 KN/cm Walzenbreite die Pressung erfolgt (DE-OS 32 01 853).

Aus der DE-PS 843 218 ist ebenfalls ein Verfahren zur Pressung von Ruß und anderen Stoffen von ähnlicher, lockerer Beschaffenheit bekannt. Zur Durchführung des Verfahrens wird eine Schneckenpresse zwecks Ableitung der entweichenden Luftmenge mit einem Auslaß versehen. Dieser kann am oberen Teil der Presse angeordnet sein, so daß er gleichzeitig als Zuführung für das Gut aus einem besonderen, über der Presse angeordneten Bunker in die Schnecke dienen kann.

Aus der Praxis ist bekannt, daß diese und ähnliche Verfahren bei vertikaler oder horizontaler Anordnung des Walzenspaltes durchgeführt werden. Der feinteilige Rauchgasgips gelangt aus der vorgeordneten Materialzugabevorrichtung allein aufgrund seines Eigengewichtes (DE-OS 16 83 904, US-PS B 431 334) oder mittels Förderschnecken (DE-OS 3207 856) in den Walzenspalt. Erfahrungen mit einem derart ausgeführten Verfahren haben ergeben, daß das kompaktierte, kleinstückige Material keine zufriedenstellende Verdichtung bis in den Kern hat. Nur wenn der Rauchgasgips derart verdichtet ist, daß seine Dichte über 2.2 kg/dm$^3$ liegt, zerfällt er unter dem Einfluß von Wasser nicht und ist deponierbar. Eine zufriedenstellende Verdichtung über die gesamte Walzenlänge läßt sich auch nicht erreichen, wenn in der trichterförmigen Materialzugabevorrichtung eine kegelige Förderschnecke eingesetzt wird. Zumindest in den Randbereichen der Walzen ist die Materialverdichtung nicht ausreichend.

Aus der EP O 173 061 A1 ist ein weiterer Versuch bekannt, pulverförmiges Material zu verdichten, indem es auf eine mit Vakuum beaufschlagte, gasdurchlässige Walze aufgesogen und vorverdichtet wird und anschließend in einem Walzenspalt verpreßt wird. Doch hat sich auch diese Art der Verdichtung als unzureichend erwiesen.

Der Erfindung liegt die Aufgabe zugrunde, ein Verfahren zum Herstellen von stückigem, kompaktiertem Material aus feinteiligem Rauchgasgips mit einem Gehalt an freiem Wasser von größer als 0 Gewichts-% in einer glatte oder aufgerauhte (profilierte) Mantelflächen aufweisenden Walzenpresse zu schaffen, mit dem bzw. mit der feinteiliger Rauchgasgips zu deponierbarem kleinstückigen Material verarbeitet werden kann.

Diese Aufgabe wird bei einem Verfahren der eingangs genannten Art dadurch gelöst, daß bei Verwendung von übereinander angeordneten Walzen mit einem Durchmesser zwischen 150 und 1500 mm unter horizontaler Materialzufuhr der Rauchgasgips mit gleichmäßiger Vorverdichtung über die Länge der Walzen mittels einer Vielfachschnecke aus ein- oder mehrgängigen, zylindrischen Schnecken mit ineinandergreifenden gleichsinn und mit gleicher Geschwindigkeit angetriebenen Gängen gleicher Steigung und mit Entlüftung im Stauraum vor dem Walzenspalt zugeführt wird und zu Schülpen mit einer Dicke von 4 bis 35 mm gepreßt wird.

Vorrichtungsmäßig enthält somit eine Walzenpresse der eingangs genannten Art die Kombination folgender Merkmale:

a) Die Walzen sind übereinander angeordnet.

b) Die den Walzen vorgeordnete Vorrichtung zur horizontalen Materialzugabe.

c) Ein bis den Walzenspalt reichender Stauraum, in den die Vielfachschnecke fördert, weist Entlüftungsauslässe auf.

d) Die Vielfachschnecke besteht aus ein- oder mehrgängigen zylindrischen Schnecken, die mit ihren gleiche Steigung aufweisenden Gängen ineinander greifen und gleichsinnig und mit gleicher Geschwindigkeit antreibbar sind.

Die Verbindung der erfindungswesentlichen Merkmale des Einsatzes von Glattwalzen, horizontaler Vielfachschneckeneinspeisung, Entlüftung vor dem Walzenspalt, Vorverdichtung und hoher spezifischer Anpressdruck, mit den überraschenden Wirkungen ist aus dem Stand der Technik nicht entnehmbar, obwohl einzelne Elemente, wie Glattwalzen (Abstract for patent 57-68300) oder Vielfachschnecken (US B 431 334), bereits bekannt waren.

Für den Erfolg des erfindungsgemäßen Verfahrens ist insbesondere die horizontale Materialzufuhr unter gleichzeitiger Vorverdichtung und Entlüftung wesentlich, weil hierdurch die Beeinflussung des Fließverhaltens im Sinne der Erfindung erreicht wird und das Material nicht mehr allein aufgrund seines Eigengewichts in den Walzenspalt gelangt. D.h., das Material kann den Walzenspalt nur passieren, wenn ein entsprechender Materialfluß durch einen Vordruck der Schneckeneinspeisung gegeben ist. Nicht länger kann feinteiliger Rauchgasgips aufgrund seines Eigengewichtes drucklos an den Rändern des Schülpenbandes durch den Walzenspalt fließen, vielmehr wird durch die Vorverdichtung mittels einer Vielfachschnecke auf der gesamten Walzenlänge eine gleichmäßige Vorverdichtung bei gleichzeitiger Entlüftung erzielt. Dadurch ist die Voraussetzung dafür geschaffen, daß der Rauchgasgips im Walzenspalt mit erheblich höherer spezifischer Anpreßkraft als beim Stand der Technik, und vor allem bis in den Kern des kleinstückigen Materials, gepreßt werden kann. Die für Deponiezwecke erforderliche Mindestdichte von über 2.2 kg/dm$^3$ für Rauchgasgips läßt sich problemlos erreichen. Wegen dieser hohen Dichte zerfällt das kleinstückige Material auch nicht unter dem Einfluß von Wasser.

Für die Durchführung des Verfahrens ist der Gehalt an freiem Wasser nicht kritisch. Es ist nicht erforderlich, daß, wie beim Verfahren der DE-OS 32 01 853, der Gehalt an freiem Wasser auf praktisch 0 Gewichts-% herabgesetzt wird, vielmehr läßt sich der Rauchgasgips mit dem Gehalt an freiem Wasser, wie er Rauchgasentschwefelungsanlagen verläßt, also mit beispielsweise 1,5 Gewichts-%, nach dem erfindungsgemäßen Verfahren kompaktieren.

Sofern Schülpen kleiner Dicke gepreßt werden sollen, wird man bevorzugt Walzen mit kleinem Durchmesser einsetzen. Die spezifische Anpreßkraft sollte in Abhängigkeit von der herzustellenden Schülpendicke unter Berücksichtigung des Walzendurchmessers zwischen 60 und 250 KN/cm Walzenlänge eingestellt werden, um zu guten Ergebnissen beim Pressen zu kommen. Der bevorzugte Bereich der beim Pressen konstant gehaltenen Anpreßkraft liegt bei 80 bis 100 KN/cm Walzenlänge.

Im folgenden wird die Erfindung anhand einer ein Ausführungsbeispiel einer Walzenpresse schematisch darstellenden Zeichnung näher erläutert. Im einzelnen zeigen:

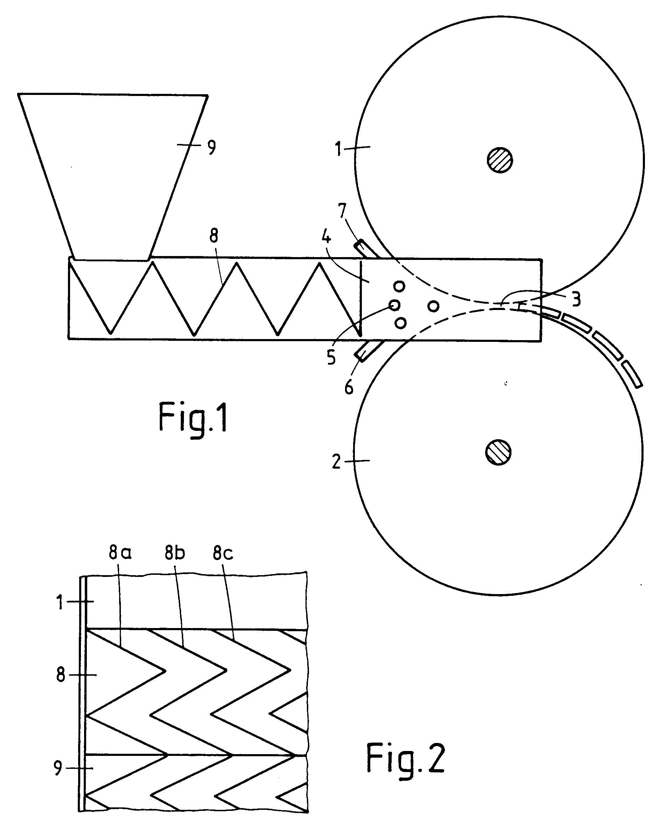

Fig. 1 eine Walzenpresse in Seitenansicht und

Fig. 2 einen Ausschnitt der Walzenpresse gemäß Figur 1 in Draufsicht.

Eine Walzenpresse mit zwei übereinander angeordneten Walzen 1,2, deren Mäntel glatt bzw. aufgerauht (profiliert) sind, bildet einen horizontalen Walzenspalt 3, in den der zu Schülpen zu pressende feinteilige Rauchgasgips gepreßt wird. Die Öffnungsweite des Walzenspaltes und damit die Dicke der Schülpen stellt sich bei konstant eingestelltem Preßdruck an der beweglichen oberen Walze 1 in Abhängigkeit von der Materialzuführung durch die Vielfachschnecke 8 selbsttätig ein.

Dem Walzenspalt 3 unmittelbar vorgeordnet ist ein Stauraum 4, der an den Stirnseiten der Walzen 1,2 und an ihren Mänteln dicht anschließt. Vom Stauraum 4 gehen Entlüftungsauslässe 5,6,7 aus. Geeignete Filter verhindern, daß aus diesen Auslässen 5 bis 7 Gips austreten kann. Statt der diskreten Entlüftungsauslässe 5, 6, 7 kann die Wand des Stauraums 4 auch aus porösem Material bestehen. Geeignete poröse Wandmaterialien sind Sintermetall.

Dem Stauraum 4 ist eine Vielfachschnecke 8 vorgeordnet, die aus vielen nebeneinander angeordneten in den Stauraum fördernden Einzelschnecken 8a, 8b, 8c besteht. Die Einzelschnecken 8a, 8b, 8c können ein oder mehrgängig sein. Sie sind zylindrisch, haben die gleiche Steigung und greifen mit ihren Schneckengängen ineinander. Sie werden gleichsinnig und mit gleicher Geschwindigkeit angetrieben. Durch diese Ausbildung der Vielfachschnecke läßt sich über die gesamte Walzenlänge ein gleichmäßiger hoher Staudruck im Stauraum 4 erzeugen. Diese Vielfachschnecke 8, die aus einem Fülltrichter 9 mit Rauchgasgips beschickt wird, sorgt dafür, daß der Rauchgasgips im Stauraum 4 über die gesamte Länge der Walzen 1,2 unter gleichmäßigem Staudruck gehalten wird und es nicht zu einem Druckabfall zu den Walzenenden hin kommt. Aufgrund dieses Staudrucks läßt sich der Rauchgasgips unter Entlüftung im Walzenspalt bis in den Kern hinein auf der gesamten Walzenlänge hochverdichten. Im Unterschied zu den von Brikettierwalzen bekannten Verfahren ergibt sich also keine in den Randbereichen weniger hohe Verdichtung mit der Gefahr, daß das hier verdichtete Material aufplatzt.

## Patentansprüche

1. Verfahren zum Herstellen von stückigem, kompaktiertem Material aus feinteiligem Rauchgasgips mit einem Gehalt an freiem Wasser von größer als 0 Gewichts-% in einer Mantelflächen aufweisenden Walzenpresse bei einer Einstellung der spezifischen Anpreßkraft auf einen Wert zwischen 60 und 250 KN/cm Walzenlänge,

**dadurch gekennzeichnet,** daß bei Verwendung von übereinander angeordneten Walzen mit einem Durchmesser zwischen 150 und 1500 mm unter horizontaler Materialzufuhr der Rauchgasgips mit gleichmäßiger Vorverdichtung über die Länge der Walzen mittels einer Vielfachschnecke aus ein- oder mehrgängigen, zylindrischen Schnecken mit ineinandergreifenden gleichsinnig und mit gleicher Geschwindigkeit angetriebenen Gängen gleicher Steigung und mit Entlüftung im Stauraum vor dem Walzenspalt zugeführt wird und zu Schülpen mit einer Dicke von 4 bis 35 mm gepreßt wird.

2. Walzenpresse aus Walzenmäntel aufweisenden Walzen und einer dem Walzenspalt vorgeordneten Materialzugabevorrichtung zur Durchführung des Verfahrens nach Anspruch 1,

**gekennzeichnet durch** die Kombination folgender Merkmale:

a) Die Walzen (1,2) sind übereinander angeordnet.

b) Die den Walzen 1,2 vorgeordnete Vorrichtung zur horizontalen Materialzugabe.

c) Ein bis in den Walzenspalt (3) reichender Stauraum (4), in den die Vielfachschnecke (8) fördert, weist Entlüftungsauslässe (5,6,7) auf.

d) Die Vielfachschnecke (8) besteht aus ein- oder mehrgängigen, zylindrischen Schnecken (8a,8b,8c), die mit ihren gleiche Steigung aufweisenden Gängen ineinander greifen und gleichsinnig und mit gleicher Geschwindigkeit antreibbar sind.

## Claims

1. Method for the manufacture of lumpy compacted material from finely divided flue-gas gypsum having a free-water content of more than 0 % by weight in a roll press having circumferential surfaces with the specific contact pressure adjusted to a value of between 60 and 250 kN/cm roll length, characterised in that, with the use of rolls arranged one above the other and having a diameter of between 150 and 1500 mm, and while material is fed horizontally, the flue-gas gypsum is fed with uniform precompression over the length of the rolls by means of a multiple screw, consisting of single-start or multi-start cylindrical screws having intermeshing channels of the same pitch which are driven in the same direction and at the same speed, and with venting in the retaining space upstream of the roll gap and is pressed into shells having a thickness of 4 to 35 mm.

2. Roll press, consisting of rolls having circumferential surfaces and of a material-feed device arranged upstream of the roll gap, for carrying out the method according to Claim 1, characterised by the combination of the following features:

a) The rolls (1, 2) are arranged one above the other.

b) The device arranged upstream of the rolls (1, 2) for the horizontal material feed.

c) A retaining space (4) extending into the roll gap (3), into which retaining space (4) the multiple screw (8) delivers, has venting outlets (5, 6, 7).

d) The multiple screw (8) consists of single-start or multi-start cylindrical screws (8a, 8b, 8c) which, with their channels having the same pitch, intermesh and can be driven in the same direction and at the same speed.

## Revendications

1. Procédé pour la fabrication de matériau en morceaux à partir de plâtre de gaz de fumée avec une teneur en eau libre supérieure à 0% en poids, dans une presse à rouleaux présentant des surfaces de chemise avec un réglage de la force de compression spécifique à une valeur entre 60 et 250 kN/cm de longueur des rouleaux, caractérisé en ce que, en utilisant des rouleaux disposés l'un au-dessus de l'autre avec un diamètre compris entre 150 et 1500mm, avec une amenée horizontale de matériau, on amène le plâtre de gaz de fumée avant la fente des rouleaux avec une préagglomération homogène sur la longueur des rouleaux au moyen d'une vis multiple constituée de vis cylindriques à une ou plusieurs spires avec des spires de même pas en prise les unes dans les autres et de même sens entraînées à la même vitesse et avec évacuation d'air dans l'espace de bourrage, et on le comprime en gales d'une épaisseur de 4 à 35mm.

2. Presse à rouleaux avec des rouleaux présentant des chemises de rouleaux et un dispositif d'amenée de matériau disposé en avant de la fente des rouleaux, pour la mise en oeuvre du procédé selon la revendication 1, caractérisée par la combinaison des caractéristiques suivantes:

a) Les rouleaux (1, 2) sont disposés l'un au-dessus de l'autre.

b) Le dispositif intercalé à l'avant des rouleaux (1, 2) pour l'amené horizontale de matériau.

c) Un espace de bourrage (4) allant jusqu'à la fente (3) des rouleaux, dans lequel la vis multiple (8) transporte, présente des sorties d'évacuation d'air (5, 6, 7).

d) La vis multiple (8) est constituée de vis cylindriques à une ou plusieurs spires (8a, 8b, 8c) qui sont en prise les unes dans les autres par leurs spires présentant le même pas et peuvent être entraînées dans le même sens et à la même vitesse.

Fig.1

Fig.2